# EUROPÄISCHE PATENTSCHRIFT

(11) **EP 0 605 784 B1**
(45) Veröffentlichungstag und Bekanntmachung des Hinweises auf die Patenterteilung: **11.06.1997**
(21) Anmeldenummer: 93118864.3
(22) Anmeldetag: 24.11.1993
(51) Int. Cl.: E04B 1/86, B32B 3/24

(54) **Akustikplatte**
Acoustic panel
Panneau acoustique

(30) Priorität: 08.01.1993 DE 9300152 U
(43) Veröffentlichungstag der Anmeldung: 13.07.1994
(73) Patentinhaber: Wilhelmi Werke AG, 35633 Lahnau (DE)
(72) Erfinder: Wilhelmi, Frank H., D-35440 Linden (DE); Bender, Klaus, Dr., D-35444 Biebertal (DE); Fiedler, Bernd, D-35578 Wetzlar (DE)
(74) Vertreter: Missling, Arne, Dipl.-Ing.

(56) Entgegenhaltungen:
- EP-A- 0 246 464
- EP-A- 0 320 680
- DE-A- 520 833
- DE-A- 3 147 174
- DE-U- 8 705 270
- DE-U- 8 804 962
- FR-A- 1 300 449
- FR-A- 2 611 777
- GB-A- 776 994
- GB-A- 858 049
- GB-A- 2 063 960
- US-A- 3 215 225
- US-A- 3 770 560

## Beschreibung

Die Erfindung betrifft eine Akustikplatte in Sandwich-Bauweise zur Bildung von schallabsorbierenden Raumdecken oder -wänden mit einer mit Durchgangsbohrungen quer zur Plattenfläche versehenen, sonst aber homogenen, leicht spangebend bearbeitbaren Trägerplatte, beispielsweise einer organisch oder anorganisch gebundenen Spanplatte oder Gipsplatte gemäß dem Oberbegriff des Anspruchs 1.

Aus der EP-A-0 246 464 ist eine Akustikwand oder Akustikdecke bekannt, die den Schall durch in der Wand bzw. Decke ausgebildete Helmholtz-Resonatoren absorbiert. Zu diesem Zweck wird eine Absorberplatte mit Durchgangsbohrungen, sogenannten Kopplungsöffnungen verwandt, die die Außenseite der Platte mit hinter diesen Kopplungsöffnungen liegende Resonatorräumen verbinden. Die durch die Kopplungsöffnungen in den Resonatorraum eintretende Schallenergie wird durch wiederholte Reflektionen allmählich abgebaut. Auf der mit den Kopplungsöffnungen versehenen Absorberplatte, ist auf der Außenseite eine luftdurchlässige, poröse, schallschluckende Schicht in Form einer Tapetenbahn aufgebracht. Auf der Innenseite der Abdeckplatte kann über die Kopplungsöffnungen ein Stapelfaservlies oder ein Stapelfasergewebe aus Glasseide, Mineralwolle oder Kunstfasern aufgebracht werden. Aufgabe dieser Schicht ist es, die Kopplungsöffnungen der Absorberplatte durch die Tapetenbahn hindurch nicht sichtbar werden zu lassen. Damit diese Absorberplatte mit ihren Helmholtz-Resonatoren wirksam werden kann, müssen die auf den beiden Seiten der mit Durchgangsbohrungen versehenen Absorberplatten aufgebrachten Schichten sehr stark porös und damit Luftdurchlässig sein.

Akustikplatten dieser oder ähnlicher Ausführung sind seit langem bekannt. Ihre Trägerplatten tragen selbst nichts zur Schallabsorption bei. Dies besorgen erst die Durchgangsbohrungen, wobei eine Dämpfung entweder mittels eines Helmholtz-Resonatorraumes hinter den Trägerplatten bewirkt wird oder dadurch, daß die Trägerplatte mit einer relativ dicken Schicht aus schallschluckendem Werkstoff, zum Beispiel Matten aus Mineral- oder Glasfasern, hinterlegt wird. Dies führt zwar zur Dämpfung der bei Resonatoren üblicherweise auftretenden schmalbandigen Resonanz, so daß der beidseitig der Resonanzfrequenz vorhandene steile Abfall der Schallschluckgradkurve abgeflacht wird; trotzdem läßt sich damit ein gleichmäßig hoher Schallschluckgrad im gesamten raumakustisch relevanten Frequenzbereich von 152 Hz bis 4000 Hz nicht erreichen. Eine Akustikplatte, die mit Bohrungen versehen ist und auf ihrer Rückseite mit einer dicken Schicht aus schallschluckendem Werkstoff hinterlegt ist, ist beispielsweise aus der EP-A-0 320 680 vorbekannt. Zur Abdeckung der Löcher auf der Sichtseite ist auf der Platte eine schalldurchlässige Putzschicht aufgebracht.

Die Erfindung hat sich deshalb die Aufgabe gestellt, eine Akustikplatte der eingangs näher bezeichneten Art so auszuführen, daß bei beibehaltener, zur Schallabsorption nichts beitragender Trägerplatte ein Schallschluckvermögen erreicht wird, das demjenigen eines porösen Absorbers gleich oder nahekommt. Außerdem soll eine derartige Akustikplatte flexibel genug sein, um ihre Absorptionsfähigkeit entweder im gesamten Frequenzband gleich hoch zu halten oder zusätzlich ein besonders hohes Absorptionsvermögen in bestimmten Frequenzintervallen zu entfalten.

Gemäß der Erfindung wird die Aufgabe ausgehend von einer Akustikplatte der eingangs bezeichneten Art gemäß den Merkmalen des Anspruchs 1 gelöst. Dabei ist es wiederum möglich, daß die innere Deckschicht mit einer Farb- und/oder Strukturbeschichtung versehen ist.

Eine derartige erfindungsgemäße Ausführung, bei der auf die übliche Hinterlegung einer dicken Schicht aus schallschluckendem Material verzichtet ist, zeigt überraschenderweise ein sehr breitbandiges Absorptionsverhalten bei hohem Schallschluckgrad.

Für die Verbesserung der Dämpfung hochfrequenter Töne sind in einer etwas veränderten Ausführung der erfindungsgemäßen Akustikplatte Sackbohrungen quer zur Plattenfläche vorgesehen, die nach der zum Raum hin gerichteten Seite offen sind.

Weitere Ausführungsbeispiele der Erfindung enthalten die Unteransprüche.

Durch die Erfindung wird insgesamt die Aufgabenstellung in überraschend einfacher Weise gelöst. Eine aus derartigen Akustikplatten zusammengesetzte Raumdecke beziehungsweise Raumwand bietet einen guten Schallschutz im gesamten hörbaren Schallbereich, gegebenenfalls verbessert in bestimmten, besonders hoch belasteten Frequenzintervallen, ohne daß dabei die üblichen Anforderungen an eine gute Bearbeitbarkeit und leichte Verlegung einer solchen Decken- beziehungsweise Wandverkleidung aufgegeben werden müßten. Bemerkenswert ist auch, daß eine Farb- und/oder Strukturbeschichtung, die auf die innere Deckschicht aufgetragen ist, keine wesentliche Beeinträchtigung des Schallschluckverhaltens hervorruft.

Es versteht sich, daß die erfindungsgemäße Akustikplatte nötigenfalls in schwer entflammbarer oder auch nicht brennbarer Ausführung gefertigt werden kann.

Die Erfindung wird nachstehend anhand der Zeichnung an mehreren Ausführungsbeispielen näher erläutert. Es zeigen
- Fig. 1: eine nicht erfindungsgemäße Akustikplatte, bestehend aus einer Trägerplatte und einer äußeren Deckschicht, aber ohne innere Deckschicht,
- Fig. 2: eine Ausführung wie Fig. 1, jedoch (nicht erfindungsgemäß) ohne die äußere Deckschicht,
- Fig. 3: eine weitere Ausführung wie Fig. 1, jedoch zusätzlich mit einer inneren Deckschicht gemäß der Erfindung,
- Fig. 4: ein Schaubild mit der Darstellung des Schallabsorptionsgrades der Akustikplatten entsprechend Fig. 1 bis 3,
- Fig. 5: ein Schaubild entsprechend Fig. 4, jedoch mit Darstellung der Hallraum-Messung,
- Fig. 6: eine weitere Ausführung wie Fig. 3, mit eingezogenen Durchgangsbohrungen,
- Fig. 7: eine Variante der Ausführung entsprechend Fig. 6,
- Fig. 8: ein Schaubild mit der Darstellung des Schallabsorptionsgrades für Akustikplatten entsprechend den Fig. 6 oder 7,
- Fig. 9: ein weiteres Schaubild mit etwas veränderten Deckschichten entsprechend Fig. 3 bzw. Fig. 1,
- Fig. 10: ein weiteres Ausführungsbeispiel, bei dem zusätzlich Sackbohrungen angeordnet sind, und
- Fig. 11: ein Schaubild für den Schallabsorptionsgrad einer Anordnung entsprechend Fig. 10.

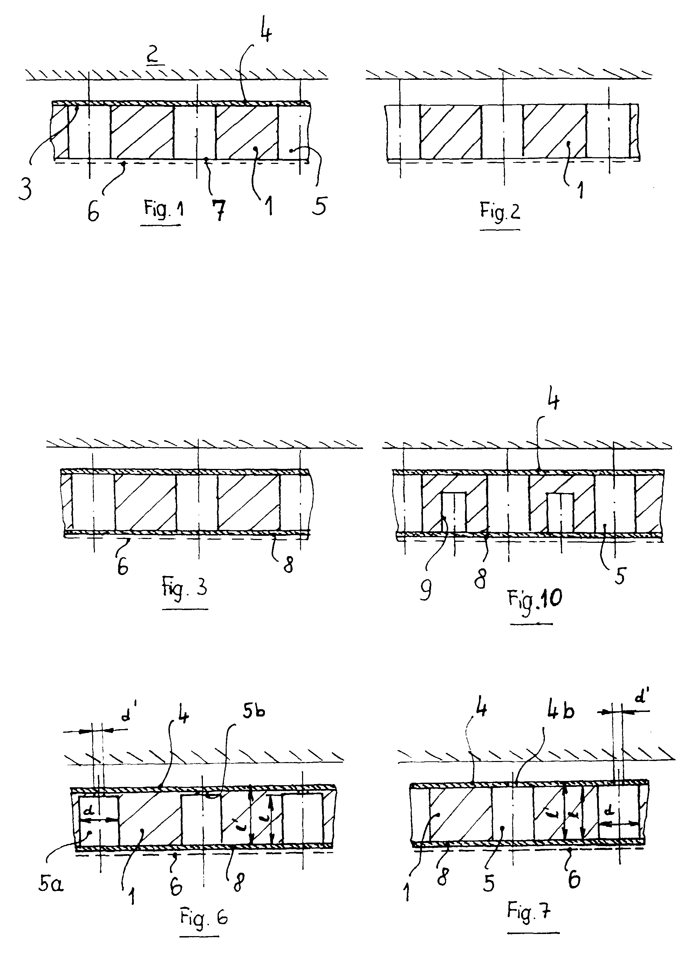

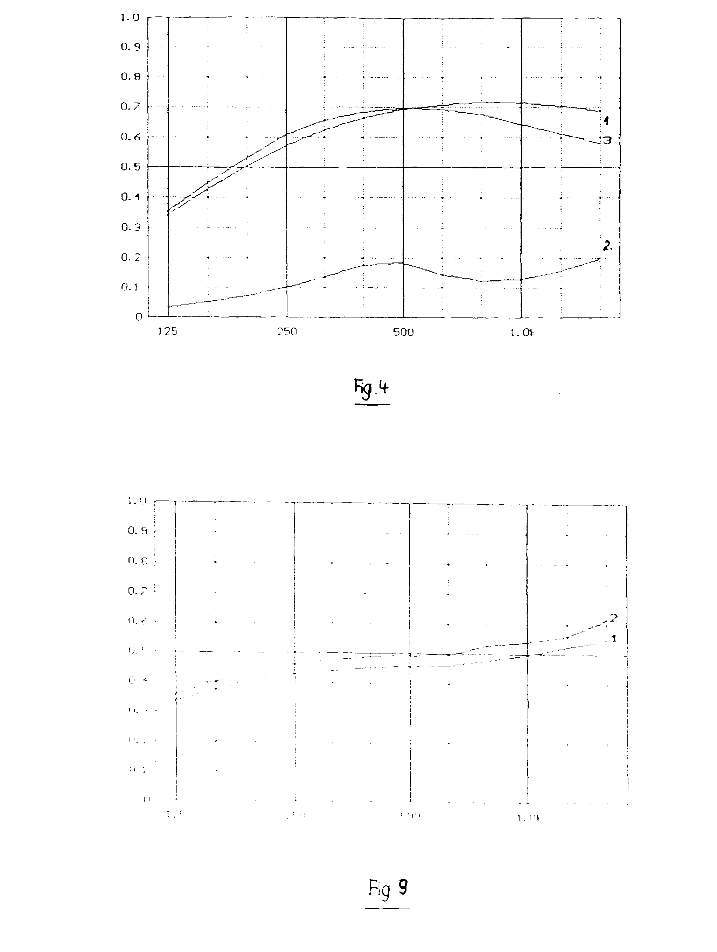

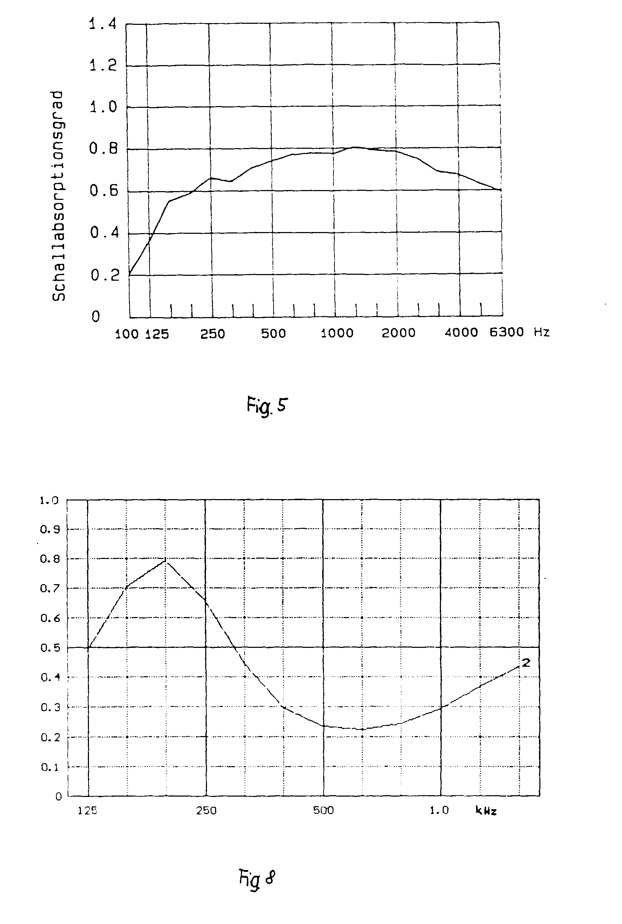

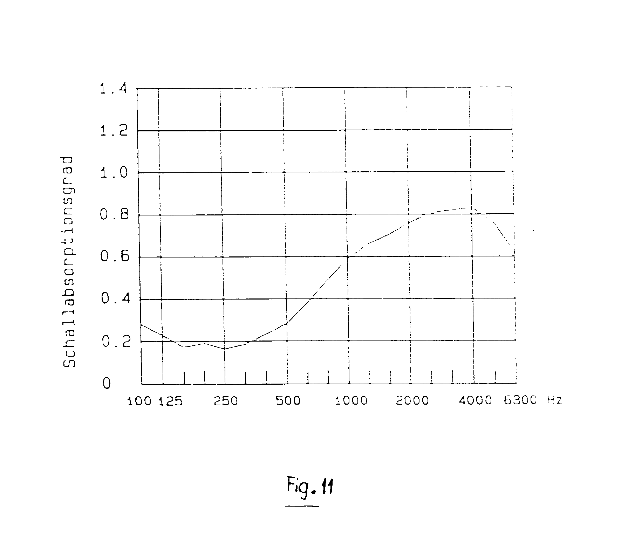

Bei einer nicht erfindungsgemäßen Anordnung entsprechend Fig. 1 ist eine Trägerplatte 1 auf ihrer zu einer Raumdecke oder -wand 2 hin gerichteten Plattenfläche 3 mit einer äußeren Deckschicht 4 versehen. Die Trägerplatte 1 ist mit Durchgangsbohrungen 5 ausgerüstet, da sie selbst aus nicht absorbierendem Werkstoff, beispielsweise aus einer Spanplatte, hergestellt ist. Eine Farb- und/oder Strukturbeschichtung 6 überdeckt diese Durchgangslöcher 5 auf der zum Raum hin gerichteten Plattenfläche 7 der Trägerplatte 1. In der Fig. 4, in der der Schallabsorptionsgrad über der Schallfrequenz aufgetragen ist, ist eine Kurve 1 gezeigt, die sich mit einer Anordnung entsprechend Fig. 1 erreichen läßt. Insbesondere im Vergleich mit einer Anordnung entsprechend Fig. 2, bei der bei unveränderter Trägerplatte 1 deren Plattenfläche 3 unbeschichtet ist, und die in Fig. 4 durch die Kurve 2 veranschaulicht ist, wird deutlich, in welchem Umfang die Schallabsorption verbessert wird, wenn eine erfindungsgemäße äußere Deckschicht vorgesehen ist. Hingegen ist in Fig. 4 auch ersichtlich, daß durch eine Anordnung entsprechend der Fig. 3, bei der gemäß der Erfindung zusätzlich eine innere Deckschicht 8 vorgesehen ist, eine weitere Verbesserung der Schallabsorption nicht erreichbar ist. Dabei ist die Fig. 4 das Schaubild einer Messung, bei der für die Deckschichten 4 und 8 dünne Vliese verwendet worden sind. Im Gegensatz dazu zeigt Fig. 9 die gleichen Meßergebnisse, wenn statt der Vliese Kunststoffolien verwendet werden; dabei entspricht die Kurve 1 einer Anordnung entsprechend Fig. 3 und die Kurve 2 einer Anordnung entsprechend Fig. 1.

In den Fig. 6 und 7 sind Abwandlungen der Anordnung entsprechend Fig. 3 getroffen, indem (Fig. 6) die Durchgangsbohrungen 5a der Trägerplatte 1 mit einem Durchmesser d auf eine kleinere Durchgangsbohrung 5b mit dem Durchmesser d' in Richtung auf die äußere Deckschicht 4 eingezogen bzw. (Fig. 7) die Durchgangsbohrungen 5 unverändert bleiben und zu ihnen koaxial in der Deckschicht 4 kleinere Durchgangsbohrungen 4b vom Durchmesser d' vorgesehen sind. Die Länge 1'-1 der kleineren Durchgangsbohrungen 4b;5b ist dabei klein gegen die Länge 1 der großen Durchgangsbohrungen 5;5a. Der für beide Varianten zugehörige Schallabsorptionsgrad ist in der Fig. 8 eingezeichnet. Eine deutliche Verbesserung der Schallabsorption in Richtung höherer Frequenzen ist unverkennbar.

Im Unterschied zu den Anordnungen entsprechend Fig. 3, 6 und 7 zeigt Fig. 10 ein Ausführungsbeispiel, bei dem zusätzlich zu den Durchgangsbohrungen 5 in der Trägerplatte 1 Sackbohrungen 9 vorgesehen sind. Fig. 11 zeigt das Meßergebnis für eine Anordnung entsprechend Fig. 10 bei der aber keine Deckschichten 4 oder 8 so wie nach der Erfindung vorgesehen waren.

## Patentansprüche

1. Akustikplatte in Sandwich-Bauweise zur Bildung von schallabsorbierenden Raumdecken oder -wänden, bestehend aus einer mit Durchgangsbohrungen (5) quer zur Plattenfläche (3;7) versehenen, sonst aber homogenen, leicht spangebend bearbeitbaren Trägerplatte (1), beispielsweise einer organisch oder anorganisch gebundenen Spanplatte oder Gipsplatte, und einer äußeren auf die Raumdecke oder -wand (2) hin gerichteten, mit der Trägerplatte (1) fest verbundenen porösen, dünnen Deckschicht (4) aus einem Vlies, einem Gewebe, einer Folie oder dergleichen, wobei eine innere, zum Raum hin gerichtete, mit der Trägerplatte (1) fest verbundene, poröse, dünne Deckschicht (8) aus einem Vlies, einem Gewebe, einer Folie oder dergleichen vorgesehen ist, dadurch gekennzeichnet, daß deren Strömungswiderstand gegen eine quer zu den Plattenflächen (3;7) gerichtete Luftströmung kleiner, vorzugsweise wesentlich kleiner, als derjenige der äußeren Deckschicht (4) ist.

2. Akustikplatte nach Anspruch 1, dadurch gekennzeichnet, daß die Trägerplatte (1) mit Sackbohrungen (9) quer zu den Plattenflächen (3;7) versehen ist, die nach der zum Raum hin gerichteten Seite offen sind.

3. Akustikplatte nach einem der Ansprüche 1 oder 2, dadurch gekennzeichnet, daß die Durchgangsbohrungen (5) und/oder die Sackbohrungen (9) einen Durchmesser zwischen 5 mm und 20 mm, vorzugsweise aber von 10 mm haben.

4. Akustikplatte nach einem der Ansprüche 1 bis 3, dadurch gekennzeichnet, daß die Durchgangsbohrungen (5) und die Sackbohrungen (9) zusammen 10% bis 30%, vorzugsweise aber 20% des Raumvolumens der Trägerplatte (1) einnehmen.

5. Akustikplatte nach einem der Ansprüche 1 bis 4, dadurch gekennzeichnet, daß Durchgangsbohrungen (5a) vorgesehen sind, deren Durchmesser (d) in der Trägerplatte (1) auf der Seite der äußeren Deckschicht (4) auf eine Durchgangsbohrung (5b) mit einem kleineren Durchmesser (d') eingezogen ist.

6. Akustikplatte nach einem der Ansprüche 1 bis 4, dadurch gekennzeichnet, daß die äußere Deckschicht (4) in den Achsen der Durchgangsbohrungen (5) in der Trägerplatte (1) konzentrische Durchgangsbohrungen (4b) aufweist, deren Durchmesser (d') kleiner ist als der Durchmesser (d) der Durchgangsbohrungen (5) in der Trägerplatte (1).

7. Akustikplatte nach einem der Ansprüche 5 oder 6, dadurch gekennzeichnet, daß der Durchmesser (d') der kleinen Durchgangsbohrungen (4b;5b) zwischen 0,5 mm und 4 mm, vorzugsweise 1,5 mm beträgt.

8. Akustikplatte nach einem der Ansprüche 5 bis 7, dadurch gekennzeichnet, daß die Länge (1') der großen Durchgangsbohrungen (5a) einschließlich der kleinen Durchgangsbohrungen (4b;5b) zwischen 50% und 95%, vorzugsweise 95% der Länge (1) der Durchgangsbohrungen (5a) in der Trägerplatte (1) allein beträgt.

9. Akustikplatte nach einem der Ansprüche 1 bis 8, dadurch gekennzeichnet, daß die innere Deckschicht (8) mit einer Farb- und/oder Strukturbeschichtung (6) versehen ist.

10. Akustikplatte nach einem der Ansprüche 1 bis 9, dadurch gekennzeichnet, daß die äußere Deckschicht (4) aus miteinander verklebten Fasern besteht, ohne daß dadurch die Porosität der Deckschicht (4) gestört ist.

11. Akustikplatte nach Anspruch 10, dadurch gekennzeichnet, daß die Fasern mittels eines organischen oder anorganischen Klebstoffes miteinander verklebt sind.

12. Akustikplatte nach einem der Ansprüche 1 bis 9, dadurch gekennzeichnet, daß die äußere Deckschicht (4) aus einer perforierten Folie besteht.

13. Akustikplatte nach einem der Ansprüche 1 bis 12, dadurch gekennzeichnet, daß die Trägerplatte (1) eine Dicke zwischen 10 mm und 30 mm, vorzugsweise aber von 19 mm hat.

14. Akustikplatte nach einem der Ansprüche 1 bis 13, dadurch gekennzeichnet, daß die äußere Deckschicht (4) eine Dicke zwischen 0,1 mm und 2 mm hat.

15. Akustikplatte nach einem der Ansprüche 1 bis 14, dadurch gekennzeichnet, daß der Werkstoff für die Trägerplatte (1) eine Dichte von 300 kg/m³ bis 1100 kg/m³ hat.

16. Akustikplatte nach einem der Ansprüche 1 bis 15, dadurch gekennzeichnet, daß die Flächendichte der inneren und/oder äußeren Deckschicht (4;8) zwischen 40 g/m² und 250 g/m² beträgt.

17. Akustikplatte nach einem der Ansprüche 9 bis 16, dadurch gekennzeichnet, daß die Flächendichte der Farb- und/oder Strukturbeschichtung (6) zwischen 150 g/m² und 4000 g/m², vorzugsweise aber 220 g/m² beträgt.

18. Akustikplatte nach einem der Ansprüche 1 bis 17, dadurch gekennzeichnet, daß ihr flächiger Umriß rechteckig ausgeführt ist und ihre Länge zwischen 40 cm und 350 cm, vorzugsweise aber 125 cm, und ihre Breite zwischen 10 cm und 125 cm, vorzugsweise aber 60 cm beträgt.

19. Akustikplatte nach einem der Ansprüche 1 bis 17, dadurch gekennzeichnet, daß ihr flächiger Umriß eine nicht rechteckige Form wie beispielsweise ein Dreieck, ein Vieleck, einen Kreis, eine Ellipse oder eine unsymmetrische Fläche aufweist.

20. Akustikplatte nach einem der Ansprüche 1 bis 19, dadurch gekennzeichnet, daß die innere und/oder äußere Deckschicht (4;8) mit der Trägerplatte (1) verklebt ist.

## Claims

1. An acoustic panel of sandwich construction for forming sound-absorbing ceilings or walls, comprising a base panel (1), for example an organically or inorganically bonded chipboard or plasterboard panel, provided with through bores (5) transversely to the panel surface (3; 7) but otherwise homogeneous and easily workable by cutting, and a thin porous outer cover layer (4) of a fleece, a fabric, a foil or the like facing the ceiling or wall (2) and firmly joined to the base panel (1), wherein a thin porous inner cover layer (8) of a fleece, a fabric, a foil or the like facing the room and firmly joined to the base panel (1) is provided, **characterized in that** the flow resistance of the inner cover layer (8) against an air stream directed transversely to the panel surfaces (3; 7) is smaller, and preferably considerably smaller, than that of the outer cover layer (4).

2. An acoustic panel according to Claim 1, **characterized in that** the base panel (1) is provided with blind-end bores (9) transversely to the panel surfaces (3; 7), which are open on the side facing the room.

3. An acoustic panel according to one of Claims 1 or 2, **characterized in that** the through bores (5) and/or the blind-end bores (9) have a diameter of between 5 mm and 20 mm, but preferably of 10 mm.

4. An acoustic panel according to one of Claims 1 to 3, **characterized in that** the through bores (5) and the blind-end bores (9) together occupy from 10% to 30%, but preferably 20%, of the spatial volume of the base panel (1).

5. An acoustic panel according to one of Claims 1 to 4, **characterized in that** through bores (5a) are provided, of which the diameter (**d**) in the base panel (1) on the side of the outer cover layer (4) is constricted to a through bore (5b) with a smaller diameter (**d**').

6. An acoustic panel according to one of Claims 1 to 4, **characterized in that** the outer cover layer (4) has through bores (4b) which are concentric with the axes of the through bores (5) in the base panel (1) and of which the diameter (**d**') is smaller than the diameter (**d**) of the through bores (5) in the base panel (1).

7. An acoustic panel according to one of Claims 5 or 6, **characterized in that** the diameter (**d**') of the small through bores (4b; 5b) is between 0·5 mm and 4 mm, preferably 1·5 mm.

8. An acoustic panel according to one of Claims 5 to 7, **characterized in that** the length (**l**') of the large through bores (5a) including the small through bores (4b; 5b) is between 50% and 95%, preferably 95%, of the length (**l**) of the through bores (5a) in the base panel (1) alone.

9. An acoustic panel according to one of Claims 1 to 8, **characterized in that** the inner cover layer (8) is provided with a coloured and/or textured coating (6).

10. An acoustic panel according to one of Claims 1 to 9, **characterized in that** the outer cover layer (4) comprises fibres stuck together, without the porosity of the cover layer (4) thereby being affected.

11. An acoustic panel according to Claim 10, **characterized in that** the fibres are stuck together by means of an organic or inorganic adhesive.

12. An acoustic panel according to one of Claims 1 to 9, **characterized in that** the outer cover layer (4) comprises a perforated foil.

13. An acoustic panel according to one of Claims 1 to 12, **characterized in that** the base panel (1) has a thickness of between 10 mm and 30 mm, but preferably 19 mm.

14. An acoustic panel according to one of Claims 1 to 13, **characterized in that** the outer cover layer (4) has a thickness of between 0·1 mm and 2 mm.

15. An acoustic panel according to one of Claims 1 to 14, **characterized in that** the material for the base panel (1) has a density of from 300 kg/m³ to 1100 kg/m³.

16. An acoustic panel according to one of Claims 1 to 15, **characterized in that** the surface density of the inner and/or outer cover layer (4; 8) is between 40 g/m² and 250 g/m².

17. An acoustic panel according to one of Claims 9 to 16, **characterized in that** the surface density of the coloured and/or textured coating (6) is between 150 g/m² and 4000 g/m², but preferably 220 g/m².

18. An acoustic panel according to one of Claims 1 to 17, **characterized in that** its flat outline is made rectangular and its length is between 40 cm and 350 cm, but preferably 125 cm, and its width is between 10 cm and 125 cm, but preferably 60 cm.

19. An acoustic panel according to one of Claims 1 to 17, **characterized in that** its flat outline has a non-rectangular shape, such as for example a triangle, a polygon, a circle, an ellipse or an asymmetrical area.

20. An acoustic panel according to one of Claims 1 to 19, **characterized in that** the inner and/or the outer cover layer (4; 8) is stuck to the base panel (1).

## Revendications

1. Plaque acoustique, fabriquée en sandwich, pour réaliser des plafonds ou des cloisons absorbant les bruits, constituée d'une plaque support (1) présentant des trous traversants (5), perpendiculaires à la surface de la plaque (3; 7), mais, par ailleurs, homogène et pouvant être usinée légèrement par enlèvement de copeaux, par exemple un panneau de particules agglomérées par un moyen organique ou un moyen inorganique ou un panneau de plâtre, et constituée d'une fine couche (4) extérieure de revêtement, tournée vers le plafond ou la paroi (2) du local, poreuse, solidaire de la plaque support (1) et faite de fibres non tissées, d'un tissu, d'une feuille, ou similaire, tandis qu'il est prévu une fine couche intérieure (8) de revêtement, poreuse, solidaire de la plaque support (1), tournée vers le local, constituée de fibres non tissées, d'un tissu, d'une feuille, ou similaire,
caractérisée en ce que la résistance à l'écoulement de la couche intérieure (8) de revêtement, s'opposant à un courant d'air dirigé perpendiculairement aux surfaces (3; 7) de la plaque, est plus faible, de préférence nettement plus faible, que celle de la couche extérieure (4) de revêtement.

2. Plaque acoustique suivant la revendication 1, caractérisée en ce que la plaque support (1) est munie, perpendiculairement aux surfaces (3; 7) de la plaque, de trous borgnes (9) ouverts vers la face tournée vers le local.

3. Plaque acoustique suivant la revendication 1 ou la revendication 2, caractérisée en ce que les trous traversants (5) et/ou les trous borgnes (9) ont un diamètre compris entre 5 mm et 20 mm, mais ont, de préférence, un diamètre de 10 mm.

4. Plaque acoustique suivant l'une des revendications 1 à 3, caractérisée en ce que les trous traversants (5) et les trous borgnes (9) occupent ensemble 10 % à 30 % de l'espace de la plaque support (1), mais, de préférence, 20 %.

5. Plaque acoustique suivant l'une des revendications 1 à 4, caractérisée en ce que sont prévus des trous traversants (5a), dont le diamètre (d) dans la plaque support (1) sur la face de la couche extérieure (4) du revêtement est raccordé à un trou traversant (5b) ayant un diamètre (d') plus petit.

6. Plaque acoustique suivant l'une des revendications 1 à 4, caractérisée en ce que la couche extérieure (4) de revêtement présente, dans les axes des trous traversants (5) dans la plaque support (1), des trous traversants (4b) concentriques, dont le diamètre (d') est plus petit que le diamètre (d) des trous traversants (5) dans la plaque support (1).

7. Plaque acoustique suivant la revendication 5 ou la revendication 6, caractérisée en ce que le diamètre (d') des petits trous traversants (4b; 5b) est compris entre 0,5 et 4 mm, et est, de préférence, de 1,5 mm.

8. Plaque acoustique suivant l'une des revendications 5 à 7, caractérisée en ce que la longueur (l') des grands trous traversants (5a), et des petits trous traversants (4b; 5b), est, à elle seule, comprise entre 50 % et 95 %, de préférence 95 %, de la longueur (l) des tous traversants (5a) dans la plaque support (1).

9. Plaque acoustique suivant l'une des revendications 1 à 8, caractérisée en ce que la couche intérieure (8) de revêtement est munie d'une couche de revêtement (6) de couleur et/ou de structure.

10. Plaque acoustique suivant l'une des revendications 1 à 9, caractérisée en ce que la couche extérieure (4) de revêtement est constituée de fibres collées entre elles, sans que, de ce fait, il soit porté atteinte à la porosité de la couche (4) de revêtement.

11. Plaque acoustique suivant la revendication 10, caractérisée en ce que les fibres sont collées entre elles au moyen d'une colle organique ou inorganique.

12. Plaque acoustique suivant l'une des revendications 1 à 9, caractérisée en ce que la couche extérieure (4) de revêtement est constituée d'une feuille perforée.

13. Plaque acoustique suivant l'une des revendications 1 à 12, caractérisée en ce que la plaque support (1) présente une épaisseur comprise entre 10 mm et 30 mm, mais, de préférence, de 19 mm.

14. Plaque acoustique suivant l'une des revendications 1 à 13, caractérisée en ce que la couche extérieure (4) de revêtement présente une épaisseur comprise entre 0,1 mm et 2 mm.

15. Plaque acoustique suivant l'une des revendications 1 à 14, caractérisée en ce que le matériau de la plaque support (1) présente une densité de 300 kg/m3 à 1100 kg/m3.

16. Plaque acoustique suivant l'une des revendications 1 à 15, caractérisée en ce que la densité de surface de la couche extérieure (4) de revêtement et/ou de la couche intérieure (8) de revêtement est comprise entre 40g/m² et 250 g/m².

17. Plaque acoustique suivant l'une des revendications 9 à 16, caractérisée en ce que la densité de surface de la couche de revêtement (6) de couleur et/ou de structure est comprise entre 150 g/m² et 4000 g/m², mais est, de préférence, de 220 g/m².

18. Plaque acoustique suivant l'une des revendications 1 à 17, caractérisée en ce que le contour de sa surface est rectangulaire et que sa longueur est comprise entre 40 cm et 350 cm, mais est, de préférence, de 125 cm, et que sa largeur est comprise entre 10 cm et 125 cm, mais est, de préférence, de 60 cm.

19. Plaque acoustique suivant l'une des revendications 1 à 17, caractérisée en ce que le contour de sa surface présente une forme non rectangulaire, comme, par exemple, un triangle, un polygone, un cercle, une ellipse, ou une surface dissymétrique.

20. Plaque acoustique suivant l'une des revendications 1 à 19, caractérisée en ce que la couche extérieure (4) de revêtement et/ou la couche intérieure (8) de revêtement sont collées sur la plaque support (1).
